# EUROPÄISCHE PATENTSCHRIFT

(11) **EP 1 382 959 B1**
(45) Veröffentlichungstag und Bekanntmachung des Hinweises auf die Patenterteilung: **13.08.2008**
(21) Anmeldenummer: 03014002.4
(22) Anmeldetag: 21.06.2003
(51) Int. Cl.: G01N 21/47

(54) **Reflexionsphotometrisches Analysesystem**
Analysis device for reflectance photometry
Dispositif pour l'analyse photométrique par réflexion

(30) Priorität: 19.07.2002 DE 10233087
(43) Veröffentlichungstag der Anmeldung: 21.01.2004
(73) Patentinhaber: Roche Diagnostics GmbH, 68305 Mannheim (DE); F. Hoffmann-La Roche AG, 4070 Basel (CH)
(72) Erfinder: Ziegler, Friedrich, 70499 Stuttgart (DE)
(74) Vertreter: Pfiz, Thomas

(56) Entgegenhaltungen:
- EP-A- 0 917 854
- EP-A- 1 241 464
- US-A- 4 716 430
- US-A- 5 546 189
- US-A- 5 654 799
- US-A- 5 801 817

## Beschreibung

Die Erfindung betrifft ein reflexionsphotometrisches Analysesystem mit einem eine Strahlungsquelle und einen Strahlungsdetektor umfassenden Messkopf zur reflektometrischen Untersuchung einer im Abstand von dem Messkopf angeordneten Zieloberfläche eines Testobjekts, insbesondere eines Teststreifens für Körperflüssigkeiten wie Urin oder Blut. Die Erfindung betrifft weiter ein entsprechendes Messverfahren.

Systeme dieser Art werden speziell im Bereich der klinischen Analytik eingesetzt, um mittels Teststreifen die Anwesenheit und Konzentration bestimmter Analyten in einer Probenflüssigkeit zu bestimmen. Dabei wird in automatisch arbeitenden Geräten eine spektroskopische Untersuchung der von bestrahlten Testfeldern der Teststreifen reflektierten Strahlung durchgeführt. Für die reflektometrische Messung kritisch ist ein gleich bleibender Messabstand, wobei zu berücksichtigen ist, dass die Testfelder unterschiedliche Höhen aufweisen und durch Aufsaugen der Probeflüssigkeit unterschiedlich aufquellen können. Hier wurde der Versuch unternommen, durch den Einsatz einer langbrennweitigen und stark abgeblendeten sowie senkrecht auf die Zieloberfläche ausgerichteten Empfangaoptik die Abstandsabhängigkeit zu verringern. Dies bedingt jedoch einen großen Platzbedarf und geringe Signalströme des eingesetzten Photodetektors, deren messtechnische Aufbereitung aufwendig ist.

In ähnlichem Zusammenhang wurde in der JP-A 03-166738 (Veröffentlichungsnummer 10948/1993) bereits ein Sensor zur Distanzmessung und eine Kontrolleinheit zur Einstellung der Messdistanz vorgeschlagen. Dort ist allerdings nichts über das Funktionsprinzip der Abstandserfassung offenbart. Problematisch ist allgemein, dass die Oberflächeneigenschaften von Teststreifen durch die Beaufschlagung mit Probenflüssigkeit stark schwanken können, da sowohl nahezu trockene, raue Oberflächen als auch nasse und damit glänzende Oberflächen vorliegen können.

Eine Vorrichtung zur nicht-invasiven Messung des Blutzudeers, die eine Abstandsregelung aufweist, ist aus EP 0 917 854 bekannt.

Ausgehend hiervon liegt der Erfindung die Aufgabe zugrunde, die im Stand der Technik aufgetretenen Nachteile zu vermeiden und ein Analysesystem und ein Verfahren der eingangs angegebenen Art dahin zu verbessern, dass eine hohe Messgenauigkeit auch bei veränderlichem Höhenverlauf der Zieloberfläche erreicht wird. Insbesondere soll eine zuverlässige Kontrolle des Messabstands ermöglicht werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Änderung des Messabstands durch eine entsprechende Strahlengangänderung ortsauflösend zu detektieren. Dementsprechend ist erfindungsgemäß eine auf der Basis optischer Triangulation arbeitende Triangulationseinheit zur berührungslosen Prüfung des Abstandes des Messkopfs zur Zieloberfläche vorgesehen. Damit kann der Einfluss von Höhenschankungen der Zieloberfläche auf einfache Weise eliminiert werden, ohne dass der Wirkungsgrad des photometrischen Meßsystems beeinträchtigt würde. Dabei können beliebige und insbesondere auch völlig diffus reflektierende Meßstellen auf der Zieloberfläche abgetastet werden. Das Triangulationsverfahren besitzt eine hohe Abstandsauflösung und kann bei Positionierbewegungen weitgehend in Echtzeit arbeiten.

Die Triangulationseinheit weist einen in einer Einfallsachse auf die Zieloberflache gerichteten Lichtsender und einen in Richtung einer Empfangsachse gegen die Zieloberfläche weisenden Lichtempfänger auf. Dabei ist es für Referenzmessungen günstig, wenn die Einfalls- und Empfangsachse sich in einem Referenzpunkt unter einem vorgegebenen Winkel schneiden, wobei der Referenzpunkt eine Sollposition der Zieloberfläche definiert.

Um bevorzugt diffus rückgestreutes Licht zu erfassen, ist es von Vorteil, wenn die Einfalls- und Empfangsachse gegenüber einem Lot auf der Zieloberfläche unterschiedliche Winkel einschließen.

Um die mit der Abstandsänderung korrelierte Lichtauslenkung zu erfassen, sieht eine bevorzugte Ausführung vor, dass der Lichtempfänger einen quer zur Empfangsachse ortsauflösenden Sensor aufweist. Vorteilhafterweise kann hier ein PSD-Sensor (Position Sensing Detector), CCD-Sensor (Charge Coupled Device) oder Mehrelement-Diodensensor Anwendung finden.

In besonders einfacher Ausgestaltung weist der Lichtempfänger als Doppelsensor zwei vorzugsweise symmetrisch zur Empfangsachse seitlich nebeneinander angeordnete Einzelsensoren, insbesondere Einzeldioden auf. Damit lassen sich Abstandsvariationen durch resultierende Beleuchtungsunterschiede der Einzelsensoren erfassen.

Eine weitere vorteilhafte Ausführung sieht vor, dass der Lichtempfänger eine mit ihrer optischen Achse die Empfangsachse definierende Sammeloptik zur Bündelung des von der Zieloberfläche reflektierten Lichts aufweist, und dass der Lichtsender eine Lichtquelle, insbesondere eine Punktlichtquelle und eine mit ihrer optischen Achse die Einfallsachse definierende Kollimatoroptik zur Erzeugung eines auf die Zieloberfläche auftreffenden Lichtbündels aufweist.

Gemäß einer weiteren bevorzugten Ausgestaltung der Erfindung besitzt der Lichtsender eine Modulationsstufe zur zeitlich veränderlichen, vorzugsweise impulsförmigen Ansteuerung einer Lichtquelle. Damit kann eine die Toleranzkompensation des Reflektionsgrads verbessert und die Nachweiselektronik vereinfacht werden. Hierfür ist es günstig, wenn der Lichtsender einen Flankengenerator zur Erzeugung von nichtlinear, vorzugsweise exponentiell ansteigenden oder abfallenden Lichtimpulsen aufweist.

Vorteilhafterweise besitzt die Triangulationseinheit eine Signalverarbeitungsschaltung zur Ermittlung von Abstandsänderungen gegenüber einer Referenzposition der Zieloberfläche. Um Positionsänderungen auf eine Zeitmessung zurückführen zu können, ist es von Vorteil, wenn die Signalverarbeitungsschaltung einen Komparator und einen Zeitgeber zur Bestimmung des zeitlichen Abstands vorgegebener Signalamplituden von Ausgangssignalen der Triangulationseinheit aufweist.

Die Erfindung sieht eine mit der Triangulationseinheit zusammenwirkende Regeleinrichtung zur Einstellung einer vorgegebenen Abstandes zwischen Zieloberfläche und Messkopf mittels eines Stellantriebs vor.

Ein Zusatznutzen lässt sich dadurch erreichen, dass der Fahrweg des Messkopfs mittels einer Wegmesseinrichtung zur Ermittlung eines Höhenprofils des Testobjekts erfassbar ist, und dass die Wegmesseinrichtung einen Höhenprofilspeicher zur Identifizierung des Testobjekts aufweist.

Alternativ zu der erfindungsgemäßen Vorrichtung ist es auch denkbar, dass der Triangulationseinheit eine Auswerteeinheit zur Normierung der photometrischen Untersuchungsergebnisse nach Maßgabe des Abstandes zwischen Zieloberfläche und Messkopf nachgeordnet ist. Ein derartiges Meßsystem ist aus US 5 801 817 bekannt.

Eine weitere funktionale Vereinfachung wird dadurch erreicht, dass die Strahlungsquelle zugleich den Lichtsender und/oder der Strahlungsdetektor zugleich den Lichtempfänger der Triangulationseinheit bilden.

Im folgenden wird die Erfindung anhand eines in der Zeichnung in schematischer Weise dargestellten Ausführungsbeispiels näher erläutert. Es zeigen:
- Fig. 1: ein Reflexionsphotometer mit einer Triangulationseinheit zur Kontrolle des Messabstands in schaubildlicher Darstellung;
- Fig. 2: ein Blockschaltbild einer Generatorschaltung zur Impulsansteuerung eines Lichtsenders der Triangulationseinheit;
- Fig. 3: ein Blockschaltbild einer mit der Triangulationseinheit zusammenwirkenden Abstandsregeleinrichtung;
- Fig. 4: ein Blockschaltbild eines Wegerfassungssystems zur Ermittlung eines Höhenprofils des untersuchten Testobjekts; und
- Fig. 5: ein Zeitdiagramm von durch die Triangulationseinheit erfassten Lichtsignalen.

Das in der Zeichnung dargestellte reflexionsphotometrische Analysesystem besteht im wesentlichen aus einem Messkopf 10 zur reflektometrischen Untersuchung der Zieloberfläche 12 eines analytischen Teststreifens 14, einer Triangulationseinheit 16 zur Prüfung bzw. Erfassung des Messabstands zwischen Messkopf 10 und Zieloberfläche 12 sowie einer Regeleinrichtung 18 zur Einstellung eines gleichbleibenden Messabstands.

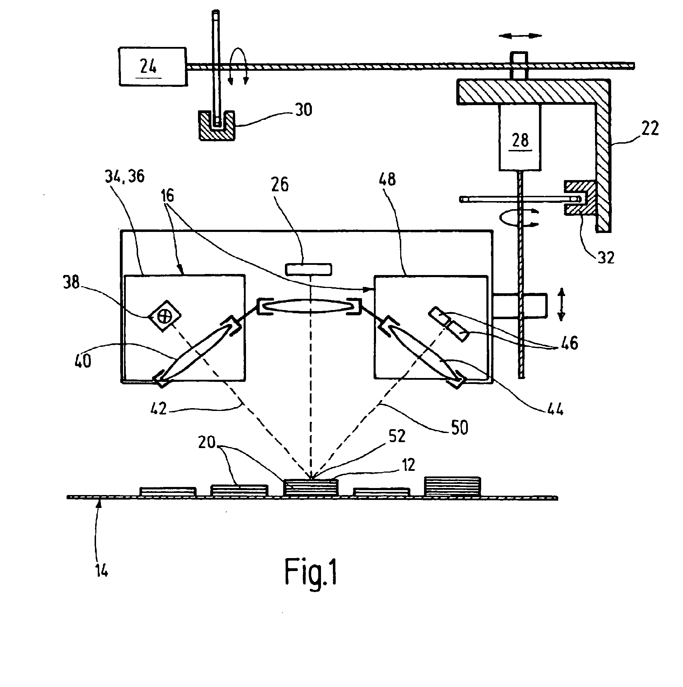

Wie aus Fig. 1 ersichtlich, weist der Teststreifen 14 verschiedene Testfelder 20 auf, die dem Nachweis spezifischer Analyten in einer zu untersuchenden Körperflüssigkeit, beispielsweise Urin oder Blut, dienen. Zu diesem Zweck lässt sich der Messkopf 10 an einem Schlitten 22 mittels eines Vorschubantriebs 24 in Streifenrichtung verfahren, während der Photodetektor 26 eines Photometers das von der Zieloberfläche 12 der Testfelder 20 reflektierte Licht erfasst. Dabei kann über einen Stellantrieb 28 der Regeleinrichtung 18 ein gleichbleibender Messabstand zwischen Photodetektor 26 und Zieloberfläche 12 der unterschiedlich dicken Testfelder 20 eingestellt werden. Zur Erfassung des Verfahrwegs des Messkopfs 10 sind an den Drehspindeln der Antriebe 24, 28 drehrichtungsempfindliche Winkelgeber 30, 32 angeordnet. Diese liefern bei einer Drehbewegung Zählimpulse, aus welchen sich entsprechend der Spindelsteigung ein Linearweg errechnen lässt.

Die Triangulationseinheit 16 weist einen Lichtsender 34 auf, der zugleich die Strahlungsquelle 36 für die reflektometrische Messung bildet. Der Lichtsender 34 umfasst eine Halbleiterdiode 38 als Lichtquelle und eine Kollimatoroptik 40 zur Erzeugung eines in Richtung einer Einfallsachse 42 auf die zieloberflache 12 gerichteten Lichtbündels.

Zur Erfassung des von der Zieloberfläche 12 reflektierten Lichtbündels besitzt die Triangulationseinheit 16 einen Lichtempfänger 48, der durch eine Sammeloptik 44 und einen aus zwei Einzeldioden 46 bestehenden Doppeldiodensensor gebildet ist. Die Sammeloptik 44 definiert mit ihrer optischen Achse eine Empfangsachse 50, die sich mit der Einfallsachse 42 in einem Referenzpunkt 52 schneidet, wodurch eine Sollposition der Zieloberfläche 12 bestimmt ist. Die Einzeldioden 46 sind symmetrisch zur Empfangsachse 50 seitlich nebeneinander angeordnet und weisen mit ihrer Empfängerfläche gegen die Zieloberfläche 12, so dass in der Sollposition beide Einzeldioden 46 gleich stark beleuchtet sind. Bei einer Bewegung aus der Sollposition heraus wandert entsprechend der Fokus des empfangenen Lichtbündels quer zur Empfangsachse 50 in der durch die Einfalls- und Empfangsachse aufgespannten Ebene, und somit wird eine der Einzeldioden 46 stärker als die andere beleuchtet. Der Beleuchtungsunterschied entspricht dabei der Abstandsänderung.

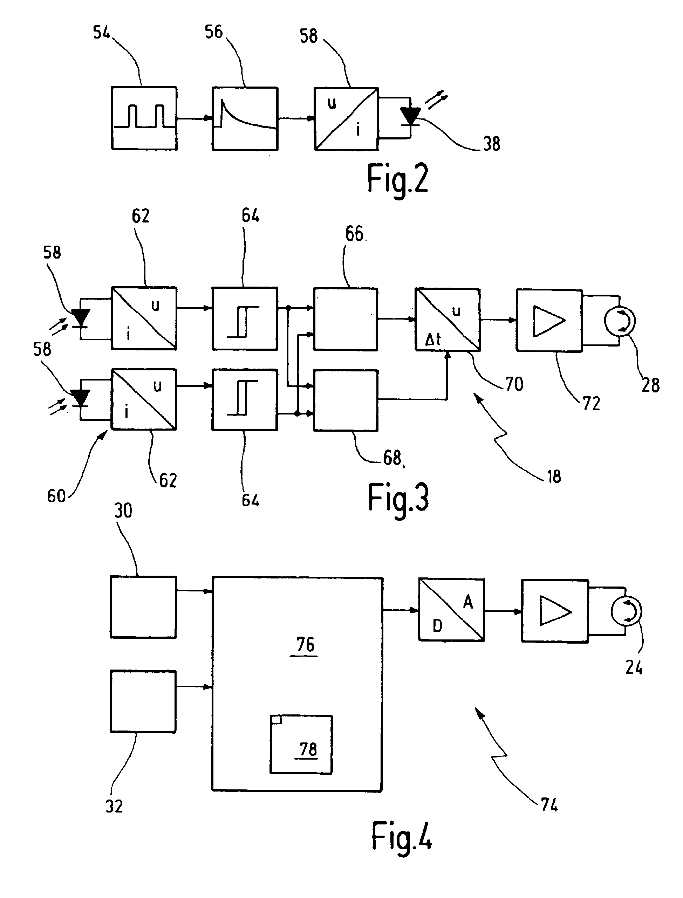

Wie in Fig. 2 veranschaulicht, ist die Lichtquelle 38 mittels einer Generatorschaltung impulsförmig ansteuerbar. Diese umfasst eine Modulationsstufe 54 zur Bestimmung der Pulsintervalle, einen Flankengenerator 56 zur Erzeugung von exponentiell abfallenden Lichtimpulsflanken und einen Spannungs-Strom-Wandler 58 zur Stromversorgung der Lichtquelle 38, wobei die Lichtintensität dem Verlauf der Stromimpulse folgt.

Wie in Fig. 3 gezeigt, sind die Ausgangssignale des Lichtempfängers 34 über eine nachgeordnete Signalverarbeitungsschaltung 60 im Sinne einer weiter unten näher beschriebenen Abstandskontrolle auswertbar. Zu diesem Zweck sind die Einzeldioden 46 über jeweils einen Strom-Spannungswandler 62 und einen SchwellwertKomparator 64 mit einem Zeitgeber 66 und einem Phasenvergleichsglied 68 verbunden. Eine nachgeordnete Integratorstufe 70 setzt die Zeitdifferenz der einem Lichtimpuls zugeordneten Komparatorsignale vorzeichenrichtig in ein entsprechendes Spannungssignal um. Dieses kann als Stellsignal einer analogen Verstärkerstufe 72 zur Ansteuerung des Stellantriebs 28 zugeführt werden. Auf diese Weise bildet die in Fig. 3 gezeigte Schaltung die Regeleinrichtung 18, welche bei der Vermessung der verschiedenen Testfelder 20 die Einhaltung der Referenzposition bzw. einen vorgegebenen Messabstand sicherstellt.

Das in Fig. 4 gezeigte Wegerfassungssystem 74 ermöglicht es, den Teststreifen 14 anhand des Höhenprofils seiner Testfelder 20 zu identifizieren. Hierfür werden die Zählimpulse der Winkelgeber 30, 32 in einem Mikrocontroller 76 gezählt, um die momentane Stellung bzw. den Verfahrweg des Messkopfs 10 ausgehend von einer Ausgangsposition zu bestimmen. Aufgrund der Abstandsregelung ergibt sich bei Betätigung des Vorschubantriebs 24 ein Höhenverlauf, der mit hinterlegten Daten in einem Höhenprofilspeicher 78 verglichen werden kann, um gegebenenfalls über die Gültigkeit der Messung zu entscheiden.

Allgemein beruht eine Distanzmessung durch Triangulation auf dem Vergleich von ähnlichen Dreiecken, die entsprechend dem Strahlengang als Objekt-Dreieck zwischen Objekt und Sammellinse und als Bild-Dreieck zwischen Sammellinse und Empfänger ausgespannt werden. Erfindungsgemäß ist das Verfahren auf relative Messungen gegenüber einer Referenzebene beschränkt, wobei durch eine Abstandsänderung der Abbildungspunkt des am Testobjekt (diffus) reflektierten Nachweislichts auf der Empfängerfläche entsprechend ausgelenkt wird. Die räumliche Auslenkung kann durch die Impulsmodulation des Nachweislichts auf eine Zeitmessung zurückgeführt werden, wobei aufgrund des exponentiellen Intensitätsverlaufs Toleranzen im optischen Wirkungsgrad des Meßsystems weitgehend ohne Einfluss bleiben.

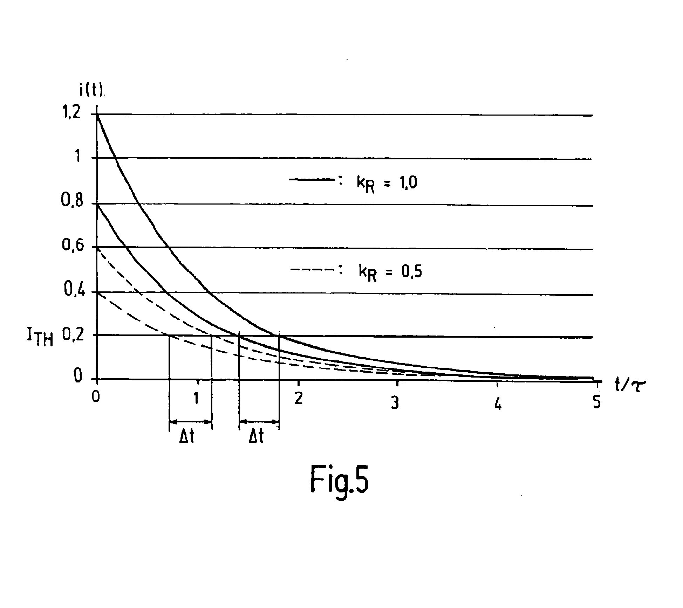

Zur weiteren Veranschaulichung dieser Wirkungsweise ist in Fig. 5 der zeitliche Verlauf der Empfängersignale der Einzeldioden 46 für den Fall eines ersten Reflektionsfaktors der Zieloberfläche 12 (durchgezogene Kurven) und eines auf die Hälfte reduzierten zweiten Reflektionsfaktors (gestrichelte Kurven) gezeigt. Dabei ist eine Abweichung von der Referenzposition angenommen, die zu einer unsymmetrischen Beleuchtung der Einzeldioden 46 und entsprechend zu unterschiedlichen Anfangsamplituden führt. Bei mit einer abfallenden e-Funktion modulierter Beleuchtungsstärke ergeben sich für den Schwellwert I_{TH} der Komparatoren 64 verschiedene Triggerzeitpunkte, deren Zeitdifferenz Δt mittels des Zeitgebers 66 erfasst wird. Die Richtung der Abstandsänderung wird dabei über die zeitliche Reihenfolge der Triggersignale in dem Phasenvergleichsglied 68 ermittelt. Wie sich aus Fig. 5 anschaulich ergibt, sind für beide Reflektionsfaktoren die Zeitintervalle Δt gleich groß. Mathematisch lässt sich zeigen, dass in der Umgebung des Sollabstandes die Zeitdifferenz Δt unabhängig vom Reflektionsfaktor und weitgehend linear abhängig von der Abstandsänderung Δh ist. Somit wird durch die vorstehend beschriebene Anordnung ein robuster Regler mit gutem Regelverhalten geschaffen.

## Patentansprüche

1. Reflexionsphotometrisches Analysesystem mit einem Teststreifen (14) für Körperflüssigkeiten wie Urin oder Blut, einem eine Strahlungsquelle (36) und einen Strahlungsdetektor (26) umfassenden Messkopf (10) zur reflektometrischen Untersuchung einer im Abstand von dem Messkopf (10) angeordneten Zieloberfläche (12) des Teststreifens (14), einer auf der Basis optischer Triangulation arbeitenden Triangulationseinheit (16) zur berührungslosen Prüfung des Abstandes des Messkopfs (10) zur Zieloberfläche (12) und einer mit der Triangulationseinheit (16) zusammenwirkenden Regeleinrichtung (18) zur Einstellung eines vorgegebenen Abstandes zwischen Zieloberfläche (12) und Messkopf (10) mittels eines Stellantriebs (28), wobei die Triangulationseinheit (16) einen in einer Einfallsachse (42) auf die Zieloberfläche (12) gerichteten Lichtsender (34) und einen in Richtung einer Empfangsachse (50) gegen die Zieloberfläche (12) weisenden Lichtempfänger (48) aufweist, und wobei die Strahlungsquelle (36) zugleich den Lichtsender (34) und/oder der Strahlungsdetektor (26) zugleich den Lichtempfänger (48) der Triangulationseinheit (16) bilden.

2. Analysesystem nach Anspruch 1, **dadurch gekennzeichnet, dass** die Einfalls- und Empfangsachse (42,50) sich in einem Referenzpunkt (52) unter einem vorgegebenen Winkel schneiden, wobei der Referenzpunkt (52) eine Sollposition der Zieloberfläche (12) definiert.

3. Analysesystem nach Anspruch 1 oder 2, **dadurch gekennzeichnet, dass** die Einfalls- und Empfangsachse (42,50) gegenüber einem Lot auf der Zieloberfläche (12) unterschiedliche Winkel einschließen.

4. Analysesystem nach einem der Ansprüche 1 bis 3, **dadurch gekennzeichnet, dass** der Lichtempfänger (48) einen quer zur Empfangsachse (50) ortsauflösenden Sensor, insbesondere einen PSD-Sensor, CCD-Sensor oder Mehrelement-Diodensensor (46) aufweist.

5. Analysesystem nach einem der Ansprüche 1 bis 4, **dadurch gekennzeichnet, dass** der Lichtempfänger (48) als Doppelsensor zwei vorzugsweise symmetrisch zur Empfangsachse (50) seitlich nebeneinander angeordnete Einzelsensoren (46) aufweist.

6. Analysesystem nach einem der Ansprüche 1 bis 5, **dadurch gekennzeichnet, dass** der Lichtempfänger (48) eine mit ihrer optischen Achse die Empfangsachse (50) definierende Sammeloptik (44) zur Bündelung des von der Zieloberfläche (12) reflektierten Lichts aufweist.

7. Analysesystem nach einem der Ansprüche 1 bis 6, **dadurch gekennzeichnet, dass** der Lichtsender (34) eine Lichtquelle (38), insbesondere eine Punktlichtquelle und eine mit ihrer optischen Achse die Einfallsachse (42) definierende Kollimatoroptik (40) zur Erzeugung eines auf die Zieloberfläche (12) auftreffenden Lichtbündels aufweist.

8. Analysesystem nach einem der Ansprüche 1 bis 7, **dadurch gekennzeichnet, dass** der Lichtsender (34) eine Modulationsstufe (54) zur zeitlich veränderlichen, vorzugsweise impulsförmigen Ansteuerung einer Lichtquelle (38) aufweist.

9. Analysesystem nach einem der Ansprüche 1 bis 8, **dadurch gekennzeichnet, dass** der Lichtsender (34) einen Flankengenerator (56) zur Erzeugung von nichtlinear, vorzugsweise exponentiell ansteigenden oder abfallenden Lichtimpulsen aufweist.

10. Analysesystem nach einem der Ansprüche 1 bis 9, **dadurch gekennzeichnet, dass** die Triangulationseinheit (16) eine Signalverarbeitungsschaltung (60) zur Ermittlung von Abstandsänderungen gegenüber einer Referenzposition der Zieloberfläche (12) aufweist.

11. Analysesystem nach Anspruch 10, **dadurch gekennzeichnet, dass** die Signalverarbeitungsschaltung (60) einen Komparator (64) und einen Zeitgeber (66) zur Bestimmung des zeitlichen Abstands vorgegebener Signalamplituden von Ausgangssignalen der Triangulationseinheit (16) aufweist.

12. Analysesystem nach einem der Ansprüche 1 bis 11, **dadurch gekennzeichnet, dass** der Fahrweg des Messkopfs (10) mittels einer Wegmesseinrichtung (74) zur Ermittlung eines Höhenprofils des Testobjekts (14) erfassbar ist.

13. Analysesystem nach Anspruch 12, **dadurch gekennzeichnet, dass** die Wegmesseinrichtung (74) einen Höhenprofilspeicher (78) zur Identifizierung des Testobjekts (14) aufweist.

14. Analysesystem nach einem der Ansprüche 1 bis 13, **gekennzeichnet durch** eine der Triangulationseinheit (16) nachgeordnete Auswerteeinheit zur Normierung der photometrischen Untersuchungsergebnisse nach Maßgabe des Abstandes zwischen Zieloberfläche (12) und Messkopf (10).

## Claims

1. Reflection-photometric analytical system comprising a test strip (14) for body fluids such as urine or blood, a measuring head (10) consisting of a radiation source (36) and a radiation detector (26) for the reflectometric examination of a target surface (12) of the test strip (14), which target surface is arranged at a distance from the measuring head (10), a triangulation unit (16) operating on the basis of optical triangulation for checking the distance of the measuring head (10) from the target surface (12) without contact, and a control device (18) that interacts with the triangulation unit (16) to set a specified distance between target surface (12) and measuring head (10) by means of a servodrive (28), wherein the triangulation unit (16) has a light emitter (34) directed towards the target surface (12) in an incidence axis (42) and a light receiver (48) pointing towards the target surface (12) in the direction of a receiving axis (50), and wherein the light source (36) is at the same time the light emitter (34) and/or the radiation detector (26) is at the same time the light receiver (48) of the triangulation unit (16).

2. Analytical system as claimed in claim 1, **characterized in that** the incidence and receiving axis (42, 50) intercept at a reference point (52) at a specified angle and the reference point (52) defines a reference position of the target surface (12).

3. Analytical system as claimed in claim 1 or 2, **characterized in that** the incidence and receiving axis (42, 50) enclose different angles relative to a perpendicular on the target surface (12).

4. Analytical system as claimed in one of the claims 1 to 3, **characterized in that** the light receiver (48) has a sensor resolving position crosswise to the receiving axis (50) and in particular a PSD sensor, CCD sensor or multielement diode sensor (46).

5. Analytical system as claimed in one of the claims 1 to 4, **characterized in that** the light receiver (48) is a double sensor with two single sensors (46) preferably arranged next to one another and symmetrically to the receiving axis (50).

6. Analytical system as claimed in one of the claims 1 to 5, **characterized in that** the light receiver (48) has a collecting optical system (44) whose optical axis defines the receiving axis (50) for focussing the light reflected from the target surface (12).

7. Analytical system as claimed in one of the claims 1 to 6, **characterized in that** the light emitter (34) has a light source (38) in particular a point light source and a collimating optical system (40) whose optical axis defines the incidence axis (42) for generating a light beam which is incident on the target surface (12).

8. Analytical system as claimed in one of the claims 1 to 7, **characterized in that** the light emitter (34) has a modulation stage (54) for the time-varying and preferably pulsed-shaped actuation of a light source (38).

9. Analytical system as claimed in one of the claims 1 to 89, **characterized in that** the light emitter (34) has an edge generator (56) to produce non-linear and preferably exponentially increasing or decreasing light pulses

10. Analytical system as claimed in one of the claims 1 to 9, **characterized in that** the triangulation unit (16) advantageously has a signal processing circuit (60) for determining changes in the distance relative to a reference position on the target surface (12).

11. Analytical system as claimed in claim 10, **characterized in that** the signal processing circuit (60) has a comparator (64) and a timer (66) to determine the time interval of specified signal amplitudes of output signals of the triangulation unit (16).

12. Analytical system as claimed in one of the claims 1 to 12, **characterized in that** the path of the measuring head (10) can be recorded by a path measuring device (74) to determine a height profile of the test object (14).

13. Analytical system as claimed in claim 12, **characterized in that** the path measuring device (74) has a height profile store (78) to identify the test object (14).

14. Analytical system as claimed in one of the claims 1 to 13, **characterized in that** the triangulation unit (16) has a subsequent evaluation unit to standardize the results of the photometric analysis on the basis of the distance between the target surface (12) and measuring head (10).

## Revendications

1. Système d'analyse photométrique par réflexion comportant une bande de test (14) pour des liquides corporels tels que l'urine ou le sang, une tête de mesure (10) comprenant une source de rayonnement (36) et un détecteur de rayonnement (26) pour l'analyse réflectométrique d'une surface cible (12) disposée à distance de la tête de mesure (10) de la bande de test (14), une unité de triangulation (16) travaillant sur la base d'une triangulation optique pour le contrôle sans contact de la distance de la tête de mesure (10) par rapport à la surface cible (12) et un dispositif de régulation (18) coopérant avec l'unité de triangulation (16) pour ajuster une distance prédéterminée entre la surface cible (12) et la tête de mesure (10) au moyen d'un actionneur (28), l'unité de triangulation (16) présentant un émetteur de lumière (34) orienté dans un axe d'incidence (42) sur la surface cible (12) et un récepteur de lumière (48) orienté dans le sens d'un axe de réception (50) contre la surface cible (12), et la source de rayonnement (36) formant en même temps l'émetteur de lumière (34) et/ou le détecteur de rayonnement (26) formant en même temps le récepteur de lumière (48) de l'unité de triangulation.

2. Système d'analyse selon la revendication 1, **caractérisé en ce que** l'axe d'incidence et l'axe de réception (42, 50) se coupent en un point de référence (52) dans un angle prédéfini, le point de référence (52) définissant une position théorique de la surface cible (12).

3. Système d'analyse selon la revendication 1 ou 2, **caractérisé en ce que** l'axe d'incidence et de réception (42, 50) comprend des angles différents par rapport à un aplomb sur la surface cible.

4. Système d'analyse selon l'une quelconque des revendications 1 à 3, **caractérisé en ce que** le récepteur de lumière (48) présente un capteur perpendiculaire à l'axe de réception (50) local, en particulier, un capteur PSD, un capteur CCD ou un capteur à diodes à multiples éléments (46).

5. Système d'analyse selon l'une quelconque des revendications 1 à 4, **caractérisé en ce que** le récepteur de lumière (48) présente comme capteur double, deux capteurs individuels de préférence symétriques par rapport à l'axe de réception (50) disposés latéralement l'un à côté de l'autre.

6. Système d'analyse selon l'une quelconque des revendications 1 à 5, **caractérisé en ce que** le récepteur de lumière (48) présente une optique collectrice (44) définissant avec son axe optique l'axe de réception (50) pour le groupement de la lumière reflétée de la surface cible (12).

7. Système d'analyse selon l'une quelconque des revendications 1 à 6, **caractérisé en ce que** l'émetteur de lumière (34) présente une source de lumière (38), en particulier une source de lumière ponctiforme et une optique de collimation (40) définissant un axe d'incidence (42) avec son axe optique pour produire un faisceau lumineux frappant la surface cible (12).

8. Système d'analyse selon l'une quelconque des revendications 1 à 7, **caractérisé en ce que** l'émetteur de lumière (34) présente un niveau de modulation (54) pour la commande d'une source de lumière (38) pouvant être modifiée temporellement, de préférence par impulsions.

9. Système d'analyse selon l'une quelconque des revendications 1 à 8, **caractérisé en ce que** l'émetteur de lumière (34) présente un générateur flanquant (56) pour produire des impulsions lumineuses non linéaires, de préférence augmentant ou diminuant de façon exponentielle.

10. Système d'analyse selon l'une quelconque des revendications 1 à 9, **caractérisé en ce que** l'unité de triangulation (16) présente un commutateur de traitement de signal (60) pour déterminer des modifications de distance par rapport à une position de référence de la surface cible (12).

11. Système d'analyse selon la revendication 10,
**caractérisé en ce que** le commutateur de traitement de signal (60) présente un comparateur (64) et un temporisateur (66) pour déterminer la distance temporelle d'amplitudes de signal prédéterminées de signaux de départ de l'unité de triangulation (16).

12. Système d'analyse selon l'une quelconque des revendications 1 à 11, **caractérisé en ce que** la course de la tête de mesure (10) peut être captée au moyen d'un dispositif de mesure de distance (74) pour déterminer un profil de hauteur de l'objet de test (14).

13. Système d'analyse selon la revendication 12,
**caractérisé en ce que** le dispositif de mesure de mesure de distance (74) présente une mémoire de profil de hauteur (78) pour identifier l'objet de test (14).

14. Système d'analyse selon l'une quelconque des revendications 1 à 13, **caractérisé par** une unité d'analyse placée après l'unité de triangulation (16) pour la normalisation des résultats d'analyse photométriques conformément à la distance entre la surface cible (12) et la tête de mesure (10).
